# FASCICULE DE BREVET EUROPEEN

(11) **EP 3 083 363 B1**
(45) Date de publication et mention de la délivrance du brevet: **02.06.2021**
(21) Numéro de dépôt: 14827834.4
(22) Date de dépôt: 15.12.2014
(51) Int. Cl.: B60W 50/16, B60W 50/14, B60W 50/00

(54) **SYSTÈME D'AVERTISSEMENT D'UN CONDUCTEUR POUR VÉHICULE AUTOMOBILE ET PROCÉDÉ ASSOCIÉ**
SYSTEM ZUR WARNUNG EINES KRAFTFAHRZEUGFAHRERS UND ZUGEHÖRIGES VERFAHREN
SYSTEM FOR WARNING A DRIVER FOR AUTOMOTIVE VEHICLE AND ASSOCIATED METHOD

(30) Priorité: 19.12.2013 FR 1362960
(43) Date de publication de la demande: 26.10.2016
(73) Titulaire: Renault S.A.S., 92100 Boulogne-Billancourt (FR)
(72) Inventeur: NICOLLE, Stéphane, F-78180 Montigny le Bretonneux (FR)
(86) Numéro de dépôt international: PCT/FR2014/053330
(87) Numéro de publication internationale: WO 2015/092242

(56) Documents cités:
- EP-A1- 2 636 577
- DE-A1- 10 249 354
- DE-A1-102011 122 566
- DE-A1-102012 206 725

## Description

### Domaine de l'invention

L'invention se situe dans le domaine des systèmes d'avertissement d'un conducteur d'un danger imminent ou futur. Plus précisément, l'invention se rapporte au domaine de l'avertissement du conducteur par des vibrations du volant de direction.

### Etat de la technique

Il est connu un système d'avertissement du conducteur, d'un danger futur ou imminent, par des vibrations du volant. Un tel système comporte un moteur d'assistance de direction relié à la crémaillère assurant la direction des roues du véhicule. La crémaillère est reliée à un volant par un arbre de direction, ce qui permet au conducteur en manœuvrant le volant de faire tourner les roues. Le système comporte, également, un moyen de détection d'un danger et une unité de contrôle commande.

L'unité de contrôle commande détecte à partir des signaux envoyés par le moyen de détection s'il y a un danger ou non. Dans le cas de figure où un danger est détecté pour le conducteur et selon le type de danger, l'unité de contrôle commande génère un signal pour commander le moteur d'assistance de direction afin qu'il produise des vibrations au niveau de la crémaillère. Les vibrations introduites par le moteur d'assistance se propagent dans la colonne de direction puis le volant, transmettant ainsi les vibrations au conducteur.

Le document DE 10249354 A1 divulgue un système d'avertissement d'un conducteur pour véhicule automobile, comporte un dispositif de vibrations en liaison avec une colonne de direction du véhicule apte à émettre des vibrations vers le conducteur, un dispositif de génération sonore et/ou lumineux apte émettre un signal sensoriel vers le conducteur, un moyen de détection d'un danger, une unité de contrôle commande générant un signal d'activation du dispositif de vibrations en fonction de la détection d'un danger par le moyen de détection.

Ces systèmes présentent l'inconvénient, en transmettant les vibrations au système de direction du véhicule, de détériorer la fonction de direction. Un moyen d'obvier à ce problème est de sur-dimensionner le système de direction afin de le rendre plus robuste aux vibrations. Cette solution est onéreuse et de plus elle n'est pas fiable. Il n'est en effet pas possible de déterminer le nombre d'activation des vibrations, puisqu'il dépend du conducteur et de son type de conduite.

### Objet de l'invention

L'invention vise à pallier les problèmes ci-dessus en proposant une solution technique qui soit indépendante du type de conduite, de conception simplifiée et à moindre coût.

D'une manière générale, l'invention vise à pallier les problématiques de gestion de l'obsolescence soit de système sollicité pour assurer d'autres prestations, soit de système ayant un élément consommable, en permettant d'assurer leurs fonctions plus longtemps.

On tend vers ce but en ce qu'un système d'avertissement d'un conducteur pour véhicule automobile, comporte un premier élément sensoriel en liaison avec un système du véhicule apte à émettre un signal sensoriel vers le conducteur, un second élément sensoriel apte émettre un signal sensoriel vers le conducteur, un moyen de détection d'un danger, une unité de contrôle commande générant un signal d'activation du premier élément sensoriel en fonction de la détection d'un danger par le moyen de détection.

Selon l'invention, le système comporte une mémoire de la durée cumulée du premier élément sensoriel et un moyen de comparaison de la durée cumulée à une valeur seuil de pérennisation dudit système du véhicule, et en ce que l'unité de contrôle commande génère un signal commandant le premier élément sensoriel et/ ou un second élément sensoriel en fonction du moyen de comparaison.

Préférentiellement, le moyen de comparaison peut comporter la mémoire enregistrant la durée cumulée des vibrations.

Le système du véhicule peut être un système de direction du véhicule comportant un arbre de direction.

Avantageusement, le premier élément sensoriel peut être un dispositif de vibration et le second élément sensoriel peut être un haut-parleur de l'habitacle.

Selon un autre aspect de l'invention, celle-ci concerne un procédé d'avertissement d'un conducteur pour véhicule automobile, comportant un premier élément sensoriel en liaison avec un système du véhicule et un second élément sensoriel. Procédé d'avertissement, dans lequel : on détecte un danger, par un moyen de détection d'un danger, on compare la durée cumulée du premier élément sensoriel à une valeur seuil de pérennisation dudit système du véhicule, on génère un signal de commande à destination d'un premier et/ ou d'un second élément sensoriel en fonction de la comparaison de la durée cumulée à la valeur seuil.

Avantageusement, on peut commander la génération d'un signal à destination d'un dispositif de vibration en liaison avec le système de direction du véhicule si la durée cumulée des vibrations émises est inférieure à la valeur seuil.

Complémentairement, on peut commander la génération d'un signal à destination d'un haut-parleur de l'habitacle si la durée cumulée du premier élément sensoriel est supérieure la valeur seuil.

### Brève description des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une représentation schématique d'un dispositif selon l'invention,
- la figure 2 est une représentation schématique de différents éléments du dispositif selon l'invention non représentés sur la figure 1,
- la figure 3 est une représentation schématique d'une cartographie de détermination de la sélection du mode d'avertissement,
- la figure 4 est une représentation schématique d'un procédé selon l'invention.

### Description détaillée

Dans la description qui va suivre, des éléments identiques, analogues ou similaires seront désignés par les mêmes références. On comprendra qu'un élément sensoriel est un dispositif compris dans le véhicule pouvant stimuler au moins l'un des sens du conducteur, à titre illustratif et non exhaustif on peut citer, un écran, un siège pouvant vibrer, un haut-parleur, un diffuseur de senteur, une surface haptique, etc.

On comprendra, également, lorsqu'il est fait mention de durée cumulée que celle-ci renvoie à la durée totale de sollicitation de l'élément sensoriel en question. En d'autres termes, la durée cumulée correspond à la somme des durées d'activations pendant lesquelles l'élément sensoriel, en liaison avec un système du véhicule, est actif. Cette durée cumulée a comme point de départ l'instant où le système du véhicule, lié au premier élément sensoriel, est intégré dans le véhicule.

L'invention qui va être décrite ci-dessous porte dans un premier temps sur un système d'avertissement d'un conducteur pour véhicule automobile comprenant, entre autre, un système de direction 1 des roues 3, 5 et dans un second temps sur un procédé d'avertissement associé au système d'avertissement.

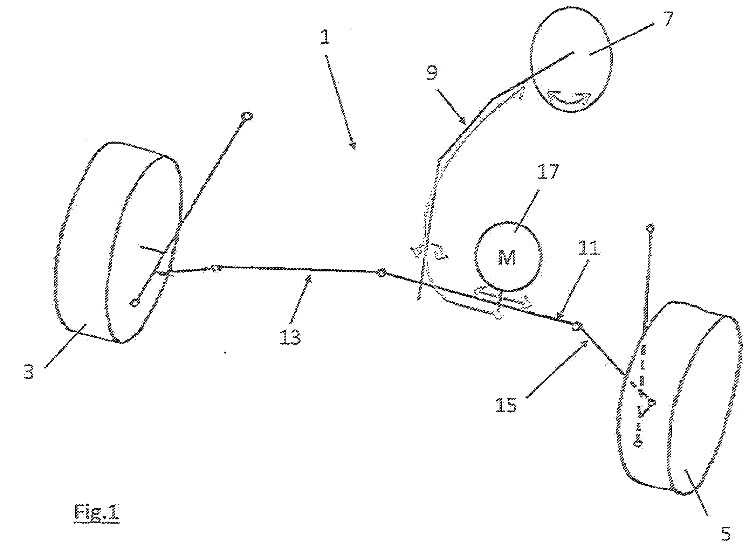

Comme représenté à la figure 1, le système de direction 1 comporte un volant 7 relié à une colonne de direction 9. La colonne de direction est liée à une crémaillère 11 située au niveau du train avant (non représenté) du véhicule. La crémaillère 11 est solidaire de deux biellettes 13, 15, chacune des biellettes 13, 15 étant disposées entre la crémaillère 11 et les roues 3, 5.

Ainsi, lorsque le conducteur tourne le volant d'un certain angle, les roues tournent proportionnellement à l'angle volant. Selon le mode de réalisation représenté à la figure 1, pour faciliter les manœuvres du conducteur lors de la rotation du volant le système de direction 1 est associé à un moteur d'assistance de direction 17. Le moteur d'assistance de direction 17 est un moteur électrique en prise avec la crémaillère 11, par exemple par pignons ou vis sans fin.

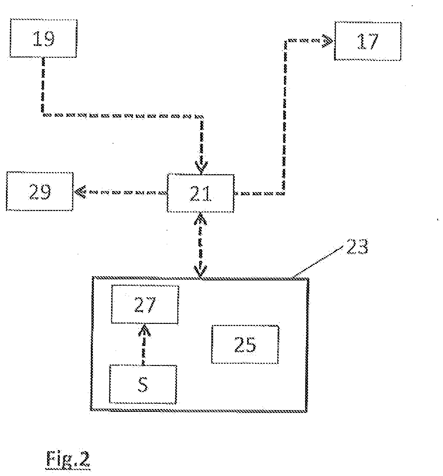

Le système d'avertissement comporte un premier élément sensoriel apte à émettre un signal sensoriel vers le conducteur apte à émettre un signal sensoriel vers le conducteur, dans ce mode de réalisation le premier élément sensoriel est un dispositif de vibration en liaison avec le système de direction 1, et un moyen de détection d'un danger 19 (figure 2). Le moyen de détection d'un danger est au moins un système d'aide à la conduite détectant et indiquant au conducteur qu'un danger est imminent ou proche, par exemple détection d'hypovigilance, détection d'angle mort, de sortie de voie, etc. On entend par aide à la conduite, tous les systèmes permettant une aide à la décision de conduite pour le conducteur, et les systèmes limitant les risques de collisions soit par une action automatique sur un système de contrôle du véhicule, soit par un simple avertissement.

De plus comme représenté à la figure 2, le système d'avertissement comporte une unité de contrôle commande 21 destinée à commander l'activation du premier élément sensoriel à destination du conducteur en cas de détection d'un danger, dans ce mode de réalisation l'unité de contrôle commande 21 commande l'activation de vibrations.

Selon le mode de réalisation présenté à la figure 1 et à la figure 2, le premier élément sensoriel est un dispositif de vibration, dans ce mode de réalisation le dispositif de vibration est le moteur d'assistance de direction 17. Dans la suite de la description, on comprendra, dans le but de la mise en œuvre de l'invention, que lorsqu'il est fait mention du dispositif de vibration, celui-ci renvoie au moteur électrique d'assistance 17. Afin d'introduire des vibrations dans le système de direction 1, le moteur électrique d'assistance 17 est commandé via un calculateur de direction (non représenté).

L'unité de contrôle commande 21 est reliée à un moyen de comparaison 23 entre la durée cumulée du premier élément sensoriel, c'est-à-dire des signaux par le premier élément sensoriel au conducteur et une valeur seuil S. Dans ce mode de réalisation, il a été choisi de prendre la durée des vibrations cumulées commandées au dispositif de vibration 17. Dans ce mode de réalisation, le point de départ de la durée cumulée correspond soit à la sortie d'usine du véhicule dans lequel l'invention est intégrée, soit au remplacement ou à la réparation de la colonne de direction (après remise à zéro de la durée cumulée précédente si besoin).

Le moyen de comparaison 23 comporte une mémoire 25 enregistrant la durée cumulée des vibrations et un calculateur 27 comparant la durée totale de vibration de la mémoire 25 à la valeur seuil S.

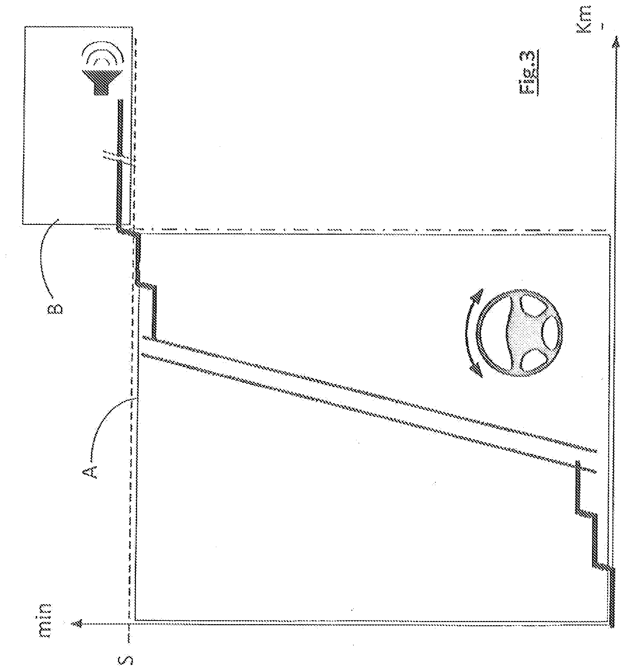

La valeur seuil S est une limite du temps pendant lequel le système de direction peut être sollicité par des vibrations sans que cela n'altère la pérennité du système de direction. La valeur seuil S est déterminée expérimentalement ou par calcul. Dans le mode de réalisation décrit et comme illustré à la figure 3, la valeur seuil S est une constante. Comme on le voit sur la figure 3, le graphique montre en fonction du roulage du véhicule le temps de fonctionnement des vibrations ou d'un second élément sensoriel. Le graphique comporte deux zones A, B. La zone A correspond à la partie pendant laquelle le dispositif de vibration 17 peut être commandé pour transmettre les avertissements de danger. La zone B, quant à elle, correspond à la partie pendant laquelle le dispositif de vibration 17 ne peut plus être commandé pour transmettre les vibrations sans induire un risque sur la qualité de fonctionnement système alors l'avertissement sera sonore par un haut-parleur 29 ou tout autre élément du système audio, dans le but de limiter une usure prématurée du système de direction.

A partir de l'information de durée cumulée des vibrations, il peut être déterminé l'état d'usure du système de direction 1, notamment de l'arbre de direction 9, dû à la transmission des vibrations.

Ainsi, l'unité de contrôle commande 21 génère un signal d'avertissement à destination du premier et/ou du second élément sensoriel pour avertir le conducteur de la détection d'un danger. Cet élément sensoriel est sélectionné en fonction de la durée cumulée de vibration.

Tant que la durée cumulée des vibrations est inférieure à la valeur seuil S l'unité de commande 21 génère un signal d'activation des vibrations à destination du moyen de vibration 17. Dès que la durée cumulée des vibrations est supérieure à la valeur seuil, l'unité de commande génère un signal d'avertissement à destination d'un élément permettant un retour sensoriel, tel qu'un élément sonore du type haut-parleur, un élément visuel du type écran, des vibrations dans le siège conducteur, etc.

L'invention porte, également, sur un procédé d'avertissement d'un conducteur pour véhicule automobile.

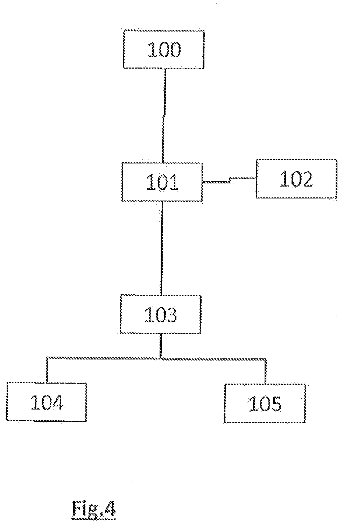

Comme représenté à la figure 4, le procédé d'avertissement comporte une étape de détection 100 d'un danger par le moyen de détection 19. Un signal est alors envoyé à l'unité de contrôle commande 21.

Une étape de comparaison 101 de la durée cumulée des vibrations à une valeur seuil S est mise en œuvre. Au cours de cette étape, on mémorise, au cours d'une étape 102, la durée cumulée des vibrations émises dans la mémoire 25 et on compare la durée cumulée des vibrations émises à la valeur seuil S. A l'issue de l'étape de comparaison, le moyen de comparaison 23 retourne une valeur indiquant si la durée cumulée est supérieure à la valeur seuil ou non, par exemple un « 1 » logique si la durée cumulée dépasse la valeur seuil et un « 0 » logique si la durée cumulée est inférieure à la valeur seuil.

L'étape de comparaison permet de signaler à l'unité de contrôle commande que la limite de durée cumulée des vibrations, ou du nombre d'activation selon le mode de réalisation, est atteinte.

Le procédé comporte une étape de génération 103 d'un signal de commande à destination d'un dispositif comportant une interface sensorielle avec le conducteur selon le résultat de l'étape de comparaison. Si la durée cumulée dépasse la valeur seuil S alors le signal de commande est adressé au haut-parleur 29, ou tout autre élément sensoriel autre que la vibration du volant. Tant que la durée cumulée est inférieure à la valeur seuil le signal est adressé au moins au dispositif de vibration 17, et selon une variante de réalisation le signal est adressé, en plus, à d'autres éléments sensoriels.

Le procédé comporte une étape d'avertissement par vibration 104 dans le volant correspondant au signal généré à l'étape de génération 103 à destination du dispositif de vibration 17 relié au système de direction, si la durée cumulée est inférieure à la valeur seuil. De plus, le procédé comporte une étape d'avertissement sonore 105 correspondant au signal généré à l'étape de génération 103 à destination du haut-parleur 27, si la durée cumulée est supérieure à la valeur seuil.

Ainsi, il est possible d'assurer la continuité de la prestation d'avertissement du danger sans altérer la pérennité de la fonction première du système du véhicule, ici le système de direction 1. Cette solution technique peut être appliquée à tout système ou dispositif destiné à vibrer pour interagir avec le conducteur et pour lequel les vibrations doivent être limité dans leur fonctionnement, notamment dans leur durée totale de fonctionnement car induisant des usures ou fatigues mécanique, comme par exemple une pédale.

L'invention n'est pas limitée aux modes de réalisation présentés, l'invention s'applique à tout système du véhicule comportant un consommable ou à durer de vie limitée et dont le niveau peut être déterminé, tel qu'un système olfactif. L'invention peut comporter comme second élément sensoriel un ordiphone.

## Revendications

1. Système d'avertissement d'un conducteur pour véhicule automobile, comportant :
- un premier élément sensoriel (17) en liaison avec un système du véhicule (1) apte à émettre un signal sensoriel vers le conducteur,
- un second élément sensoriel (29) apte émettre un signal sensoriel vers le conducteur,
- un moyen de détection d'un danger (19),
- une unité de contrôle commande (21) générant un signal d'activation du premier élément sensoriel en fonction de la détection d'un danger par le moyen de détection (19),
le système est **caractérisé en ce que**
il comporte une mémoire (25) de la durée cumulée du premier élément sensoriel (17) et un moyen de comparaison (23) de la durée cumulée à une valeur seuil (S) de pérennisation dudit système du véhicule (1), et **en ce que** l'unité de contrôle commande (21) génère un signal commandant le premier élément sensoriel (17) et/ ou un second élément sensoriel (29) en fonction du moyen de comparaison (23).

2. Système d'avertissement selon la revendication 1, **caractérisé en ce que** le moyen de comparaison (23) comporte la mémoire (25) enregistrant la durée cumulée des vibrations.

3. Système d'avertissement selon la revendication 1 ou 2, dans lequel le système du véhicule (1) est un système de direction du véhicule comportant un arbre de direction (9).

4. Système d'avertissement selon l'une des revendications 1 à 3, dans lequel le premier élément sensoriel est un dispositif de vibration (17).

5. Système d'avertissement selon l'une des revendications 1 à 4, **caractérisé en ce que** le second élément sensoriel (29) est un haut-parleur (29) de l'habitacle.

6. Procédé d'avertissement d'un conducteur pour véhicule automobile, comportant un premier élément sensoriel en liaison avec un système du véhicule (1) et un second élément sensoriel (29), dans lequel :
i) on détecte un danger, par un moyen de détection d'un danger (19),
ii) on compare la durée cumulée du premier élément sensoriel (17) à une valeur seuil (S) de pérennisation dudit système du véhicule (1),
iii) on génère un signal de commande à destination d'un premier et/ ou d'un second élément sensoriel (17, 29) en fonction de la comparaison de la durée cumulée à la valeur seuil (S).

7. Procédé d'avertissement selon la revendication 6, dans lequel on commande la génération d'un signal à destination d'un dispositif de vibration (17) en liaison avec le système de direction du véhicule si la durée cumulée des vibrations émises est inférieure à la valeur seuil (S).

8. Procédé d'avertissement selon la revendication 6 ou 7, dans lequel on commande la génération d'un signal à destination d'un haut-parleur (29) de l'habitacle si la durée cumulée du premier élément sensoriel (17) est supérieure à la valeur seuil (S).

## Patentansprüche

1. System zur Warnung eines Fahrers für ein Kraftfahrzeug, aufweisend:
- ein erstes sensorisches Element (17) in Verbindung mit einem System des Fahrzeugs (1), das geeignet ist, ein sensorisches Signal an den Fahrer abzugeben,
- ein zweites sensorisches Element (29), das geeignet ist, ein sensorisches Signal an den Fahrer abzugeben,
- ein Mittel zur Feststellung einer Gefahr (19),
- eine Steuerungseinheit (21), die ein Aktivierungssignal des ersten sensorischen Elements in Abhängigkeit von der Feststellung einer Gefahr durch das Feststellungsmittel (19) erzeugt,
wobei das System **dadurch gekennzeichnet ist, dass** es einen Speicher (25) der kumulierten Dauer des ersten sensorischen Elements (17) und ein Mittel zum Vergleich (23) der kumulierten Dauer mit einem Fortbestands-Schwellenwert (S) des Systems des Fahrzeugs (1) aufweist, und dadurch, dass die Steuerungseinheit (21) ein Signal erzeugt, das das erste sensorische Element (17) und/oder ein zweites sensorisches Element (29) in Abhängigkeit von dem Vergleichsmittel (23) steuert.

2. Warnsystem nach Anspruch 1, **dadurch gekennzeichnet, dass** das Vergleichsmittel (23) den Speicher (25) aufweist, der die kumulierte Dauer der Vibrationen speichert.

3. Warnsystem nach Anspruch 1 oder 2, wobei das System des Fahrzeugs (1) ein Lenkungssystem des Fahrzeugs ist, das eine Lenkwelle (9) aufweist.

4. Warnsystem nach einem der Ansprüche 1 bis 3, wobei das erste sensorische Element eine Vibrationsvorrichtung (17) ist.

5. Warnsystem nach einem der Ansprüche 1 bis 4, **dadurch gekennzeichnet, dass** das zweite sensorische Element (29) ein Lautsprecher (29) der Fahrgastzelle ist.

6. Verfahren zur Warnung eines Fahrers für ein Kraftfahrzeug, aufweisend ein erstes sensorisches Element in Verbindung mit einem System des Fahrzeugs (1) und ein zweites sensorisches Element (29), wobei:
i) eine Gefahr durch ein Mittel zur Feststellung einer Gefahr (19) festgestellt wird,
ii) die kumulierte Dauer des ersten sensorischen Elements (17) mit einem Fortbestands-Schwellenwert (S) des Systems des Fahrzeugs (1) verglichen wird,
iii) in Abhängigkeit von dem Vergleich der kumulierten Dauer mit dem Schwellenwert (S) ein Steuersignal an ein erstes und/oder zweites sensorisches Element (17, 29) erzeugt wird.

7. Warnverfahren nach Anspruch 6, wobei die Erzeugung eines Signals an eine Vibrationsvorrichtung (17) in Verbindung mit dem Lenkungssystem des Fahrzeugs befohlen wird, wenn die kumulierte Dauer der abgegebenen Vibrationen unter dem Schwellenwert (S) liegt.

8. Warnverfahren nach Anspruch 6 oder 7, wobei die Erzeugung eines Signals an einen Lautsprecher (29) der Fahrgastzelle befohlen wird, wenn die kumulierte Dauer des ersten sensorischen Elements (17) über dem Schwellenwert (S) liegt.

## Claims

1. Warning system for warning a driver, for a motor vehicle, comprising:
- a first sensory element (17) linked to a system of the vehicle (1), able to emit a sensory signal to the driver,
- a second sensory element (29) able to emit a sensory signal to the driver,
- a hazard detection means (19),
- a monitoring and control unit (21) generating an activation signal for activating the first sensory element on the basis of the detection of a hazard by the detection means (19),
the system being **characterized in that**
it comprises a memory (25) for storing the total duration of the first sensory element (17) and a comparison means (23) for comparing the total duration with a continuation threshold value (S) for said system of the vehicle (1), and **in that** the monitoring and control unit (21) generates a signal that commands the first sensory element (17) and/or a second sensory element (29) on the basis of the comparison means (23).

2. Warning system according to Claim 1, **characterized in that** the comparison means (23) comprises the memory (25) recording the total duration of the vibrations.

3. Warning system according to Claim 1 or 2, wherein the system of the vehicle (1) is a steering system of the vehicle comprising a steering shaft (9).

4. Warning system according to one of Claims 1 to 3, wherein the first sensory element is a vibration device (17) .

5. Warning system according to one of Claims 1 to 4, **characterized in that** the second sensory element (29) is a loudspeaker (29) in the passenger compartment.

6. Warning method for warning a driver, for a motor vehicle, comprising a first sensory element linked to a system of the vehicle (1) and a second sensory element (29), wherein
i) a hazard is detected by a hazard detection means (19) ,
ii) the total duration of the first sensory element (17) is compared with a continuation threshold value (S) for said system of the vehicle (1),
iii) a control signal is generated for a first and/or a second sensory element (17, 29) on the basis of the comparison of the total duration with the threshold value (S).

7. Warning method according to Claim 6, wherein the generation of a signal for a vibration device (17) linked to the steering system of the vehicle is commanded if the total duration of the emitted vibrations is lower than a threshold value (S).

8. Warning method according to Claim 6 or 7, wherein the generation of a signal for a loudspeaker (29) in the passenger compartment is commanded if the total duration of the first sensory element (17) is greater than the threshold value (S).
